# EUROPEAN PATENT SPECIFICATION

(11) **EP 4 033 097 B1**
(45) Date of publication and mention of the grant of the patent: **24.04.2024**
(21) Application number: 21827557.6
(22) Date of filing: 31.03.2021
(51) Int. Cl.: F04B 39/00

(54) **SUCTION MUFFLER**
SAUGSCHALLDÄMPFER
SILENCIEUX D'ASPIRATION

(30) Priority: 30.11.2020 CN 202011383896
(43) Date of publication of application: 27.07.2022
(73) Proprietor: Anhui Meizhi Compressor Co., Ltd., Hefei, Anhui 230031 (CN)
(72) Inventor: WU, Wenjie, Hefei Anhui 230031 (CN); HUANG, Gang, Hefei Anhui 230031 (CN)
(74) Representative: Whitlock, Holly Elizabeth Ann
(86) International application number: PCT/CN2021/084622
(87) International publication number: WO 2022/110599

(56) References cited:
- EP-A1- 3 204 645
- EP-A1- 3 726 055
- CN-A- 103 925 190
- CN-A- 105 649 994
- CN-A- 105 649 994
- CN-A- 109 469 599
- CN-U- 208 982 244
- KR-A- 20080 093 583
- KR-B1- 100 641 122
- US-A- 5 647 314
- US-A1- 2009 038 329

## Description

### FIELD

Embodiments of the present disclosure relate to the field of muffling technologies of compressors, and more particularly to a suction muffler.

### BACKGROUND

Noises of refrigerators mainly come from refrigerator compressors, and the refrigerator compressors are equipped with a muffler to reduce the noises of the refrigerator compressors. The muffler in the related art includes a housing and a partition plate. The partition plate is provided in the housing to divide internal space of the housing into two expansion cavities. The housing is further provided with a suction port and a discharge port. Pulsation of the airflow sucked from the suction port can cause significant disturbance to the airflow in the expansion cavities and even cause resonance in severe cases, which affects muffling effect of the expansion cavities. US2009038329A1 relates generally to a suction muffler for a reciprocating hermetic compressor. EP3204645A1 relates generally to an acoustic attenuating device applied in hermetic compressors. CN105649994A relates generally to a silencer for eliminating low-frequency noise of the refrigeration system. CN109469599A relates generally to an air suction silencer for reducing the adverse influence of the liquid impact on the compressor. EP3726055A1 relates generally to a muffler to reduce the noise output of a vacuum pump.

### SUMMARY

The present invention is set out in the claims. The present disclosure is made by the inventor at least based on discoveries and understandings of the following facts and problems.

In the related art, internal space of a muffler is divided into a left expansion cavity and a right expansion cavity. Taking the case in which a suction port is provided at a side where the left expansion cavity is located as an example, airflow sucked at the suction port will directly enter the left expansion cavity, pulsation of the sucked airflow will cause disturbance to the airflow in the left expansion cavity, which easily causes vibration of the side of the muffler where the left expansion cavity is located, and even causes resonance in severe cases, thereby reducing muffling effect of the muffler.

To this end, an embodiment of the present disclosure proposes a suction muffler, which can reduce disturbance of airflow pulsation at the suction port to the airflow in the expansion cavity and further avoid occurrence of resonance. As a result, the muffling effect of the suction muffler can be ensured.

The suction muffler according to the invention includes a housing assembly, at least one partition plate and a first tube. The housing assembly defines a cavity and is provided with a suction port and a discharge port. The at least one partition plate is provided in the cavity to divide the cavity into at least two muffler cavities. The at least two muffler cavities include a first muffler cavity and a second muffler cavity, and the at least one partition plate defines a penetrating hole to communicate the first muffler cavity with the second muffler cavity. The suction port corresponds to the first muffler cavity. The first tube has at least a portion provided in the first muffler cavity. One end of the first tube is in communication with the suction port, and the other end of the first tube passes through the at least one partition plate and is in communication with the second muffler cavity.

The suction muffler according to at least one embodiment of the present disclosure reduces disturbance of airflow pulsation at the suction port to the airflow in an expansion cavity, to ensure muffling effect of the suction muffler.

In some embodiments, the suction muffler includes a second tube having at least a portion provided in the second muffler cavity, an end of the second tube is coupled to one partition plate, and the second tube is in communication with the first muffler cavity through the penetrating hole in the at least one partition plate.

In some embodiments, the first tube is a circular tube, and an inner diameter of the first tube is in a range of 6 mm-8 mm; and/or the second tube is a circular tube, and an inner diameter of the second tube is in a range of 6 mm-8 mm.

In some embodiments, a surface of an inner wall of the housing assembly is provided with a first slot, and a portion of the partition plate is fitted in the first slot.

In some embodiments, an end portion of the first tube is provided with a coupling member, the coupling member is coupled to the housing assembly, and the coupling member defines a communication hole configured to communicate the suction port with the first tube.

In some embodiments, a surface of an inner wall of the housing assembly is provided with a second slot, and a portion of the coupling member is fitted in the second slot.

According to the invention, the discharge port is in communication with the first muffler cavity, the suction port is located below the discharge port, and in an up-down arrangement direction of the discharge port and the suction port, an end portion of the first tube coupled to the suction port is higher than an end portion of the first tube in communication with the second muffler cavity.

In some embodiments, the suction port is located below the discharge port, and in an up-down arrangement direction of the discharge port and the suction port, the penetrating hole is located above an end portion of the first tube in communication with the second muffler cavity.

In some embodiments, the housing assembly includes a barrel and a cover, a top of the barrel is a top opening, the cover is provided at the top opening of the barrel, the partition plate and the first tube are both provided in the barrel, the suction port is provided to the barrel, and the discharge port is provided to the cover.

In some embodiments, the first muffler cavity has a first length in a direction from the first muffler cavity to the second muffler cavity, the second muffler cavity has a second length in the direction from the first muffler cavity to the second muffler cavity, and a ratio of the first length to the second length is between one-third to two-thirds.

### BRIEF DESCRIPTION OF THE DRAWINGS

FIG. 1 is a perspective view of a suction muffler according to an embodiment of the present disclosure.
FIG. 2 is an exploded view of the suction muffler in FIG. 1.
FIG. 3 is a top view of the suction muffler in FIG. 1.
FIG. 4 is a schematic view of a partition plate and a first tube of the suction muffler in FIG. 1.
FIG. 5 is a front view of the partition plate and the first tube in FIG. 4.
FIG. 6 is a schematic view of a barrel of a housing assembly of the suction muffler in FIG. 1.

### Reference numerals:

housing assembly 1; cover 11; barrel 12; first muffler cavity 13; second muffler cavity 14; first slot 15; second slot 16; third slot 17;
suction port 2;
discharge port 3;
partition plate 4;penetrating hole 41;
first tube 5;
second tube 6;
coupling member 7; communication hole 71.

### BRIEF DESCRIPTION OF THE DRAWINGS

Embodiments of the present disclosure will be described in detail below, and examples of the embodiments are shown in accompanying drawings. The embodiments described herein with reference to drawings are explanatory, illustrative, and used to generally understand the present disclosure. The embodiments shall not be construed to limit the present disclosure. In the specification, it is to be understood that terms such as "central," "longitudinal," "lateral," "length," "width," "thickness," "upper," "lower," "front," "rear," "left," "right," "vertical," "horizontal," "top," "bottom," "inner," "outer," "clockwise," "counterclockwise," "axial," "radial" and "circumferential" should be construed to refer to the orientation as then described or as shown in the drawings under discussion. These relative terms are for convenience of description and do not require that the present disclosure be constructed or operated in a particular orientation.

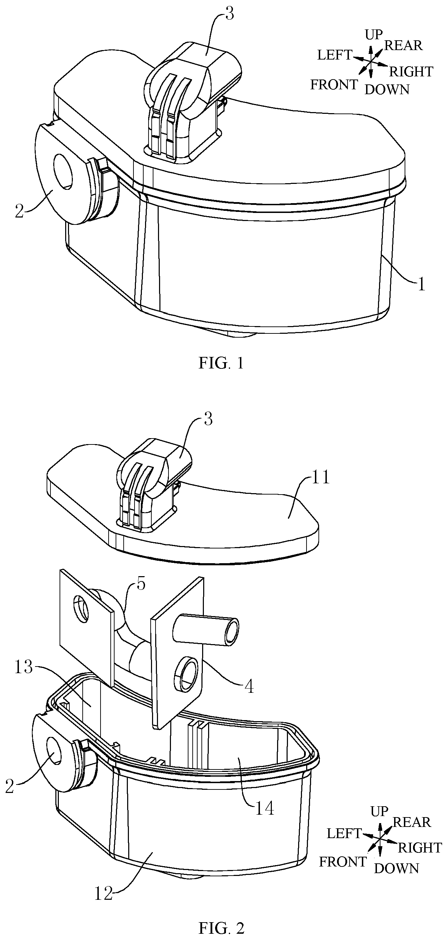

A suction muffler according to embodiments of the present disclosure is described below with reference to FIGS. 1-6.

As illustrated in FIGS. 1-6, a suction muffler according to an embodiment of the present disclosure includes a housing assembly 1, a partition plate 4 and a first tube 5.

The housing assembly 1 defines a cavity, and the housing assembly 1 is provided with a suction port 2 and a discharge port 3. Specifically, as illustrated in FIGS. 1 and 2, the housing assembly 1 has a front-rear direction, a left-right direction and an up-down direction. In the present embodiment, the suction port 2 is provided to a surface of a front side of the housing assembly 1, and runs through a front side wall of the housing assembly 1. The discharge port 3 is provided to a top surface of the housing assembly 1, and runs through a top wall of the housing assembly 1. In the present embodiment, an inside of the housing assembly 1 is the cavity, and the suction port 2 and the discharge port 3 separately communicate an outside of the housing assembly 1 with the cavity of the housing assembly 1.

At least one partition plate 4 is provided in the cavity to divide the cavity into at least two muffler cavities, and the at least two muffler cavities include a first muffler cavity 13 and a second muffler cavity 14. The at least one partition plate defines a penetrating hole to communicate the first muffler cavity 13 with the second muffler cavity 14. The discharge port 3 is in communication with the first muffler cavity 13, and the suction port 2 corresponds to the first muffler cavity 13.

Specifically, in the present embodiment, the partition plate 4 is provided in the cavity of the housing assembly 1, and the partition plate 4 divides the cavity of the housing assembly 1 into two muffler cavities. The two muffler cavities are the first muffler cavity 13 and the second muffler cavity 14 respectively. The partition plate 4 defines a penetrating hole 41, the penetrating hole 41 runs through the partition plate 4, and the first muffler cavity 13 and the second muffler cavity 14 are communicated through the penetrating hole 41. In the present embodiment, the discharge port 3 is in communication with the first muffler cavity 13, and the suction port 2 is also in communication with the first muffler cavity 13. It should note that, in the present embodiment, the first muffler cavity 13 and the second muffler cavity 14 have no essential difference. It could be understood that, in some other embodiments, the discharge port 3 may also be in communication with the second muffler cavity 14. In the present embodiment, provision of the penetrating hole 41 in the partition plate 4 enables airflow in the second muffler cavity 14 to flow into the first muffler cavity 13 via the penetrating hole 41, and subsequently to be discharged via the discharge port 3.

It could be understood that, in some other embodiments, the cavity of the housing assembly 1 may be provided with two or more partition plates 4, and the two or more partition plates 4 divide the cavity of the housing assembly 1 into at least three muffler cavities. The at least three muffler cavities include the first muffler cavity 13 and the second muffler cavity 14. The first muffler cavity 13 is located at a left side of the housing assembly 1, the second muffler cavity 14 is located at a right side of the housing assembly 1, and the remaining muffler cavities are located between the first muffler cavity 13 and the second muffler cavity 14. In this case, each partition plate 4 between the first muffler cavity 13 and the second muffler cavity 14 defines a penetrating hole 41, and the first muffler cavity 13 and the second muffler cavity 14 are communicated through the penetrating hole 41 in each partition plate 4.

At least a portion of the first tube 5 is provided in the first muffler cavity 13, an end of the first tube 5 is in communication with the suction port 2, and another end of the first tube 5 passes through the at least one partition plate 4 and is in communication with the second muffler cavity 14.

Specifically, in the present embodiment, the majority of the first tube 5 is located in the first muffler cavity 13, an end of the first tube 5 is coupled to a surface of an inner wall of the housing assembly 1 and in communication with the suction port 2. It should note that, in order to prevent the airflow sucked through the suction port 2 from flowing into the first muffler cavity 13, in the present embodiment, the first tube 5 is sealingly coupled to the housing assembly 1. In the present embodiment, the other end of the first tube 5 passes through the partition plate 4 and is in communication with the second muffler cavity 14. It should note that, in the present embodiment, the partition plate 4 defines a through hole for passage of the first tube 5. In order to prevent the airflow from flowing through a gap between the first tube 5 and the through hole, in the present embodiment, the first tube 5 is sealingly coupled to the partition plate 4.

It could be understood that, in some other embodiments, the housing assembly 1 may be internally provided with a plurality of partition plates 4, and the plurality of partition plates 4 are arranged sequentially along a direction from the first muffler cavity 13 to the second muffler cavity 14. In this case, the first tube 5 needs to pass through each partition plate 4. In other words, one end of the first tube 5 is in communication with the suction port at the first muffler cavity 13, the other end of the first tube 5 is in communication with the second muffler cavity 14, and a middle portion of the first tube 5 passes through each muffler cavity between the first muffler cavity 13 and the second muffler cavity 14 sequentially.

In the suction muffler according to embodiments of the present disclosure, the provision of the first tube 5 enables the airflow sucked from the suction port 2 to directly flow into the second muffler cavity 14 via the first tube 5, to prevent the airflow from directly flowing into the first muffler cavity 13 adjacent to the suction port 2. During the process of the airflow flowing along the first tube 5, the energy of the airflow will be consumed to have an effect of weakening the airflow pulsation, reducing disturbance of the airflow pulsation at the suction port 2 to the airflow in the first muffler cavity 13, and reducing the vibration of the suction muffler. Thus, muffling effect of the suction muffler can be ensured.

Additionally, the arrangement form of the first tube 5, the partition plate 4, the first muffler cavity 13 and the second muffler cavity 14 in the present disclosure is an advantageous configuration that is obtained at least based on numerous three-dimensional modeling and simulation tests. The arrangement form of the first tube 5 and the partition plate 4 in the present disclosure exhibits minor disturbance to the airflow in the muffler cavity and has satisfactory muffling effect in the simulation tests.

In some embodiments, as illustrated in FIGS. 2-4, the suction muffler also includes a second tube 6. At least a portion of the second tube 6 is provided in the second muffler cavity 14, an end of the second tube 6 is coupled to one partition plate 4, and the second tube 6 is in communication with the first muffler cavity 13 through the penetrating hole 41 in the at least one partition plate 4.

Specifically, in the present embodiment, major portion of the second tube 6 is located in the second muffler cavity 14, an end of the second tube 6 is coupled to the partition plate 4, and the second tube 6 is in communication with the first muffler cavity 13 through the penetrating hole 41 in the partition plate 4. The other end of the second tube 6 extends into the second muffler cavity 14, and the airflow in the second muffler cavity 14 can flow into the first muffler cavity 13 via the second tube 6. In the present embodiment, the provision of the second tube 6 enhances the effect of weakening the airflow pulsation, by further consuming the energy of the airflow. Thus, the muffling effect of the suction muffler can be further enhanced. In addition, in the present embodiment, the provision of the second tube 6 is also an advantageous configuration that is obtained at least based on numerous three-dimensional modeling and simulation tests. The suction muffler provided additionally with the second tube 6 has much minor disturbance to the airflow in the muffler cavity and has more satisfactory muffling effect in the simulation tests.

It could be understood that, in some other embodiments, the housing assembly 1 may be internally provided with a plurality of partition plates 4. The plurality of partition plates 4 divide the inner cavity of the housing assembly 1 into a plurality of muffler cavities, and the plurality of muffler cavities are arranged sequentially in the left-right direction. The plurality of muffler cavities includes a first muffler cavity 13 and a second muffler cavity 14. The first muffler cavity 13 is located at a left side of the housing assembly 1, the second muffler cavity 14 is located at a right side of the housing assembly 1, and the remaining muffler cavities are located between the first muffler cavity 13 and the second muffler cavity 14. An end of the second tube 6 extends into the second muffler cavity 14, and the other end of the second tube 6 may be coupled to any one of the partition plates 4. For example, the other end of the second tube 6 may be directly coupled to the partition plate 4 at the leftmost side, and in this case the airflow from the second tube 6 flows directly into the first muffler cavity 13. The other end of the second tube 6 may also be coupled to the partition plate 4 at the rightmost side, and in this case the airflow from the second tube 6 flows into the first muffler cavity 13 via the penetrating holes 41 in the remaining partition plates 4 sequentially.

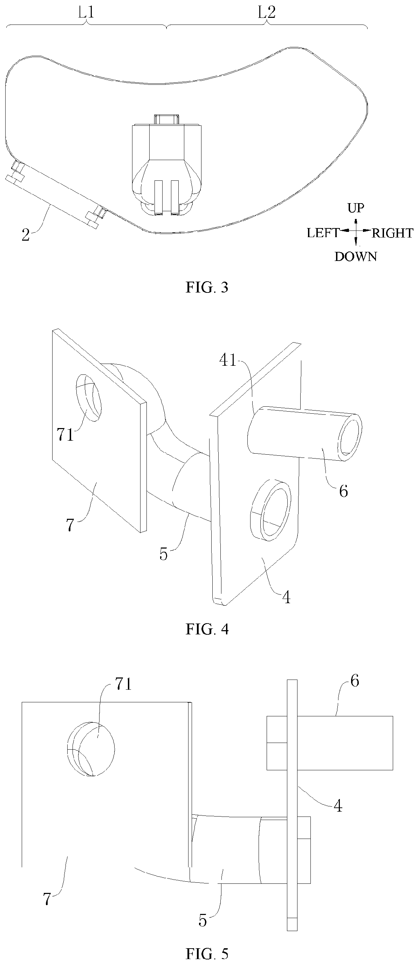

In some embodiments, as illustrated in FIGS. 4 and 5, the first tube 5 is a circular tube, and an inner diameter of the first tube 5 is in a range of 6 mm-8 mm, and/or, the second tube 6 is a circular tube and an inner diameter of the second tube 6 is in a range of 6 mm-8 mm. Specifically, in the present embodiment, each of the first tube 5 and the second tube 6 is a circular tube, the inner diameter of the first tube 5 can be any value in the range of 6 mm-8 mm, e.g., 6 mm, 6.5 mm, 7 mm, 7.5 mm, 8 mm, etc.; and the inner diameter of the second tube 6 can be any value in the ranged of 6 mm-8 mm, e.g., 6 mm, 6.5 mm, 7 mm, 7.5 mm, 8 mm, etc. The individual range setting of the inner diameters of the first tube 5 and the second tube 6 is also an advantageous configuration that is obtained at least based on numerous three-dimensional modeling and simulation tests, and the inner diameter of the first tube 5 and the inner diameter of the second tube 6, within 6 mm-8 mm, can provide better muffling effect. It could be understood that, in some other embodiments, one of the first tube 5 and the second tube 6 may be a non-circular tube. For example, the second tube 6 may be a square tube, a triangular tube, etc.

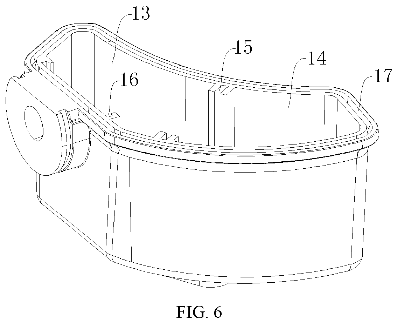

In some embodiments, as illustrated in FIG. 6, the surface of the inner wall of the housing assembly 1 is provided with a first slot 15, and a portion of the partition plate 4 is fitted in the first slot 15. Specifically, in the present embodiment, the first slot 15 is provided to the surface of the inner wall of the housing assembly 1, and when mounting the partition plate 4, the partition plate 4 is directly inserted into the first slot 15, and an edge of the partition plate 4 is consequently embedded in the first slot 15, to implement plug-in mounting and fixing of the partition plate 4. The provision of the first slot 15 can facilitate mounting and detachment of the partition plate 4; meanwhile, the wall of the first slot 15 may be designed to protrude from the surface of the inner wall of the housing assembly 1, and in this case the first slot 15 can also act as a reinforcing rib, to enhance structural strength of the housing assembly 1.

In some embodiments, as illustrated in FIG. 4, an end portion of the first tube 5 is provided with a coupling member 7. The coupling member 7 is coupled to the housing assembly 1, the coupling member 7 defines a communication hole 71, and the communication hole 71 is configured to communicate the suction port 2 with the first tube 5. Specifically, in the present embodiment, the coupling member 7 is provided at an end of the first tube 5. The coupling member 7 is configured to be coupled and fixed to the surface of the inner wall of the housing assembly 1. The coupling member 7 defines the communication hole 71, and after the coupling member 7 is coupled and fixed to the surface of the inner wall of the housing assembly 1, the communication hole 71 communicates the first tube 5 with the suction port 2. In this way, the airflow sucked from the suction port 2 can directly flow into the first tube 5 via the communication hole 71. The provision of the coupling member 7 facilitates coupling and fixing of the first tube 5 and the surface of the inner wall of the housing assembly 1, and further facilitates mounting and detachment of the first tube 5.

In some embodiments, as illustrated in FIG. 6, the surface of the inner wall of the housing assembly 1 is provided with a second slot 16. A portion of the coupling member 7 is fitted in the second slot 16. Specifically, in the present embodiment, the second slot 16 is provided to the surface of the inner wall of the housing assembly 1, and when mounting the first tube 5, the coupling member 7 is inserted into the second slot 16 and an edge of the coupling member 7 is accordingly embedded in the second slot 16, to implement clamping and fixing of the coupling member 7, and further to realize coupling and fixing of an end of the first tube 5 and the housing assembly 1. The provision of the second slot 16 facilitates mounting and detachment of the coupling member 7; meanwhile fitting between the coupling member 7 and the second slot 16 also facilitates mating of the first tube 5 and the suction port 2. When the coupling member 7 is inserted into place, the mating of the first tube 5 and the suction port 2 can be implemented.

In some embodiments, as illustrated in FIG. 4, the discharge port 3 is in communication with the first muffler cavity 13, the suction port 2 is located below the discharge port 3, and in the up-down arrangement direction of the discharge port 3 and the suction port 2, an end portion of the first tube 5 coupled to the suction port 2 is higher than an end portion of the first tube 5 in communication with the second muffler cavity 14.

Specifically, in the present embodiment, the end of the first tube 5 configured to communicate with the suction port 2 is higher than the end of the first tube 5 configured to communicate with the second muffler cavity 14. By this configuration, a pressure at the end of the first tube 5 configured to communicate with the suction port 2 is greater than a pressure at the end of the first tube 5 configured to communicate with the second muffler cavity 14, such that the airflow flows into the second muffler cavity 14 via the first tube 5 conveniently. Additionally, this configuration is also an advantageous configuration that is obtained at least based on numerous three-dimensional modeling and simulation tests, and can further improve the muffling effect.

In some embodiments, as illustrated in FIG. 4, the suction port 2 is located below the discharge port 3, and in the up-down arrangement direction of the discharge port 3 and the suction port 2, the penetrating hole 41 is located above the end portion of the first tube 5 in communication with the second muffler cavity 14. Specifically, in the present embodiment, the penetrating hole 41 is higher than the end of the first tube 5 in communication with second muffler cavity 14, and this design renders the airflow in the second muffler cavity 14 to flow from bottom to top, to have an effect of further consuming the energy of the airflow, and to further ensure the muffling effect.

In some embodiments, as illustrated in FIG. 2, the housing assembly 1 includes a barrel 12 and a cover 11. A top of the barrel 12 is an opening, and the cover 11 is provided at the top opening of the barrel 12. The partition plate 4 and the first tube 5 are both provided in the barrel 12, the suction port 2 is provided to the barrel 12, and the discharge port 3 is provided to the cover 11.

Specifically, in the present embodiment, the housing assembly 1 has a split form, and the housing assembly 1 includes two parts of the barrel 12 and the cover 11. The barrel 12 has a barrel-like structure, and the top of the barrel 12 is an opening. The partition plate 4, the first tube 5 and the second tube 6 may be placed in the barrel 12 via the top opening of the barrel 12, the cover 11 is provided at the top opening of the barrel 12, and the cover 11 is configured to seal and close the top opening of the barrel 12, to make the cavity of the housing assembly 1 a sealed cavity. In the present embodiment, the discharge port 3 is provided to the cover 11, the suction port 2 is provided to the barrel 12, and after the cover 11 is fixed to the barrel 12, the discharge port 3 is located above the suction port 2. The split form of the housing assembly 1 facilitates mounting and detachment of the partition plate 4, the first tube 5 and the second tube 6, and also facilitates processing of the housing assembly 1.

In some embodiments, as illustrated in FIG. 3, the first muffler cavity 13 has a first length in a direction from the first muffler cavity 13 to the second muffler cavity 14, the second muffler cavity 14 has a second length in the direction from the first muffler cavity 13 to the second muffler cavity 14, and a ratio of the first length to the second length is in a range of one-third to two-thirds.

Specifically, in the present embodiment, the first muffler cavity 13 and the second muffler cavity 14 are arranged sequentially in the left-right direction. In the left-right direction, the first muffler cavity 13 has a first length, the first length is a maximum length of the first muffler cavity 13 in the left-right direction, and the first length is L1 in FIG. 3; the second muffler cavity 14 has a second length, the second length is a maximum length of the second muffler cavity 14 in the left-right direction, and the second length is L2 in FIG. 3. In the present embodiment, a ratio of the first length L1 to the second length L2 may be any value from one-third to two-thirds, e.g., 0.35, 0.38, 0.4, 0.45, 0.5, 0.6, etc. The ratio of the first length to the second length set within the above range is a an advantageous configuration that is obtained at least based on multiple three-dimensional modeling and simulation tests, and within the above value range, the suction muffler has satisfactory muffling effect.

In some embodiments, a bottom of the housing assembly 1 defines a drain hole (not illustrated), and the drain hole is in communication with the second muffler cavity 14. Specifically, since the suction muffler is coupled to a compressor when in operation, during reciprocating operation of the compressor, lubrication oil will be guided into the second muffler cavity 14 along the first tube 5. The provision of the drain hole facilitates the discharge of the lubrication oil in the second muffler cavity 14. It could be understood that, in some other embodiments, the bottom of the housing assembly 1 may define a plurality of drain holes, some others of the drain holes are in communication with the first muffler cavity 13, and some other of the drain holes are in communication with the second muffler cavity 14. Such arrangement facilitates the discharge of the lubrication oil in the first muffler cavity 13 and the second muffler cavity 14.

A suction muffler according to a specific embodiment of the present disclosure will be described below with reference to FIGS. 1-6.

As illustrated in FIGS. 1 and 2, the suction muffler according to embodiments of the present disclosure includes a housing assembly 1, a partition plate 4, a first tube 5 and a second tube 6.

The housing assembly 1 defines a cavity, and the partition plate 4 is provided in the cavity of the housing assembly 1. In the present embodiment, the partition plate 4 is vertically arranged in the up-down direction, the partition plate 4 divides the cavity of the housing assembly 1 into two muffler cavities, and the two muffler cavities are a first muffler cavity 13 and a second muffler cavity 14 respectively. In the present embodiment, the first muffler cavity 13 and the second muffler cavity 14 are sequentially arranged in the left-right direction, and the first muffler cavity 13 is located at a left side of the second muffler cavity 14. In the present embodiment, the partition plate 4 defines a penetrating hole 41, the penetrating hole 41 runs through the partition plate 4, and the first muffler cavity 13 and the second muffler cavity 14 are communicated through the penetrating hole 41.

The housing assembly 1 is provided with a suction port 2 and a discharge port 3. In the present embodiment, the suction port 2 is provided to a surface of the front side of the housing assembly 1, and runs through the front side wall of the housing assembly 1. The discharge port 3 is provided to the top surface of the housing assembly 1, and runs through the top wall of the housing assembly 1. In the present embodiment, the discharge port 3 is in communication with the first muffler cavity 13, and when the first tube 5 is not mounted in the housing assembly 1, the suction port 2 is also in communication with the first muffler cavity 13.

In the present embodiment, an end of the first tube 5 is sealingly coupled to a surface of the inner wall of the housing assembly 1 and is in communication with the suction port 2; and the other end of the first tube 5 passes through the partition plate 4 and is in communication with the second muffler cavity 14. In the present embodiment, the partition plate 4 defines a through hole for passage of the first tube 5, and the first tube 5 and the partition plate 4 are sealingly coupled. In the present embodiment, an end of the second tube 6 is coupled to the partition plate 4, and the second tube 6 is in communication with the first muffler cavity 13 through the penetrating hole 41 in the partition plate 4. The other end of the second tube 6 extends into the second muffler cavity 14, and thus, the airflow of the second muffler cavity 14 can flow into the first muffler cavity 13 via the second tube 6. In the present embodiment, each of the first tube 5 and the second tube 6 is a circular tube, an inner diameter of the first tube 5 is 7 mm, and an inner diameter of the second tube 6 is 6 mm.

In order to facilitate mounting of the partition plate 4, the first tube 5 and the second tube 6, as illustrated in FIG. 2, in the present embodiment, the housing assembly 1 has a split form, and the housing assembly 1 includes two parts of a barrel 12 and a cover 11. The barrel 12 has a barrel-like structure, a top of the barrel 12 has a top opening, and the partition plate 4, the first tube 5 and the second tube 6 can be placed in the barrel 12 via the top opening of the barrel 12. The cover 11 is provided at the top opening of the barrel 12, and the cover 11 is configured to seal and close the top opening of the barrel 12, to make each of the first muffler cavity 13 and the second muffler cavity 14 a sealed cavity. In the present embodiment, the discharge port 3 is provided to the cover 11, the suction port 2 is provided to the barrel 12, and after the cover 11 is fixed to the barrel 12, the discharge port 3 is located above the suction port 2.

In order to facilitate mounting and detachment of the partition plate 4, as illustrated in FIG. 6, in the present embodiment, a surface of an inner wall of the barrel 12 defines a first slot 15. The first slot 15 includes a first slot segment, a second slot segment and a third slot segment. Each of the first slot segment, the second slot segment and the third slot segment can be a U-shaped slot with a U-shaped cross section. The first slot segment is provided to a surface of a front inner wall of the barrel 12, the second slot segment is provided to a surface of a rear inner wall of the barrel 12, and the third slot segment is provided to a surface of a bottom inner wall of the barrel 12. In the present embodiment, the first slot segment and the second slot segment are arranged oppositely, a slot opening of the first slot segment and a slot opening of the second slot segment are both oriented towards the inside of the barrel 12. That is, the slot opening of the first slot segment is oriented rearwardly, and the slot opening of the second slot segment is oriented frontwardly. In the present embodiment, a top end of the first slot segment runs through a surface of a top end of the barrel 12, and a top end of the second slot segment runs through the surface of the top end of the barrel 12. In the present embodiment, an end of the third slot segment is coupled to the first slot segment, the other end of the third slot segment is coupled to the second slot segment, and a slot opening of the third slot segment is oriented upwardly. When mounting the partition plate 4, the partition plate 4 is vertically inserted downwardly through the top opening of the barrel 12, front and rear edges of the partition plate 4 will be inserted downwardly into the first slot segment and the second slot segment, respectively; after the partition plate 4 is slid downwardly into place, a bottom edge of the partition plate 4 will be inserted into the third slot segment, to realize the fixing of the partition plate 4.

In order to facilitate mounting and detachment of the first tube 5, as illustrated in FIG. 4, in the present embodiment, an end portion of the first tube 5 is provided with a coupling member 7. The coupling member 7 is provided at the first tube 5 and configured to communicate with an end of the suction port 2, and the coupling member 7 is configured to be coupled and fixed to a surface of the inner wall of the barrel 12. The coupling member 7 defines a communication hole 71, and after the coupling member 7 is coupled and fixed to the surface of the inner wall of the barrel 12, the communication hole 71 communicates the first tube 5 with the suction port 2.

In the present embodiment, the coupling member 7 is a rectangular insertion plate, as illustrated in FIG. 6, a surface of the front inner wall of the barrel 12 is provided with a second slot 16. The second slot 16 includes a fourth slot segment and a fifth slot segment, and each of the fourth slot segment and the fifth slot segment is a U-shaped slot with a U-shaped cross section. In the present embodiment, the fourth slot segment and the fifth slot segment are arranged to extend in the up-down direction, and the fourth slot segment and the fifth slot segment are arranged oppositely. A slot opening of the fourth slot segment is oriented towards the fifth slot segment, and a slot opening of the fifth slot segment is oriented towards the fourth slot segment. In the present embodiment, a top end of the fourth slot segment runs through a surface of the top end of the barrel 12, and a bottom end of the fourth slot segment extends to a surface of an inner bottom of the barrel 12. Similarly, a top end of the fifth slot segment runs through the surface of the top end of the barrel 12, and a bottom end of the fifth slot segment extends to the surface of the inner bottom of the barrel 12. When mounting the first tube 5, the coupling member 7 is inserted into the second slot 16 from above, two side edges of the coupling member 7 will be snap-fitted into the fourth slot segment and the fifth slot segment, to implement the fixing of the coupling member 7, and to further facilitate mating and communication of the first tube 5 and the suction port 2.

In order to promote the muffling effect, in the present embodiment, an end of the first tube 5 configured to communicate with the suction port 2 is higher than an end of the first tube 5 configured to communicate with the second muffler cavity 14, and the penetrating hole 41 is higher than the end of the first tube 5 in communication with the second muffler cavity 14. That is, the second tube 6 is located above the end of the first tube 5 in communication with the second muffler cavity 14.

As illustrated in FIG. 3, in the left-right direction, in the present embodiment, the first muffler cavity 13 has a first length, the first length is a maximum length of the first muffler cavity 13 in the left-right direction, and the first length is L1 in FIG. 3; the second muffler cavity 14 has a second length, the second length is the maximum length of the second muffler cavity 14 in the left-right direction, and the second length is L2 in FIG. 3. In the present embodiment, a ratio of the first length L1 to the second length L2 is 0.6.

In order to facilitate mounting of the cover 11 onto the barrel 12, in the present embodiment, a surface of an annular top end of the barrel 12 defines a circle of third slot 17, and the third slot 17 is an annular slot in the top surface of the barrel 12. Correspondingly, the cover 11 is provided with an annular protrusion (not illustrated). When mounting, the cover 11 is snap-fitted with the top opening of the barrel 12, and the annular protrusion of the cover 11 will be inserted into the third slot 17, to realize insertion and snap-fitting assembly of the cover 11 and the barrel 12.

In order to facilitate outflow of the lubrication oil, in the present embodiment, a bottom of the barrel 12 further defines a drain hole, and the drain hole is in communication with the second muffler cavity 14.

When using the suction muffler according to the present embodiment, the airflow will be sucked into the first tube 5 from the suction port 2, flow into the second muffler cavity 14 along the first tube 5, into the first muffler cavity 13 via the second tube 6, and finally out of the first muffler cavity 13 via the discharge port 3. Since the airflow first flows into the second muffler cavity 14 away from the suction port 2, airflow pulsation has smaller influence, to ensure the muffling effect.

A suction muffler according to another specific embodiment of the present disclosure will be described below with reference to the accompanying drawings.

The suction muffler according to embodiments of the present disclosure includes a housing assembly 1, a partition plate 4, a first tube 5 and a second tube 6. The housing assembly 1, the partition plate 4, the first tube 5 and the second tube 6 may be the same as that of the above-described embodiments, and will not be repeated herein. The difference is that in the present embodiment, the first tube 5 is a circular tube, and an inner diameter of the first tube 5 is 8 mm; and the second tube 6 is a circular tube, and an inner diameter of the second tube 6 is 6 mm.

A suction muffler according to yet another specific embodiment of the present disclosure will be described below with reference to the accompanying drawings.

The suction muffler according to embodiments of the present disclosure includes a housing assembly 1, a partition plate 4, a first tube 5 and a second tube 6. The housing assembly 1, the partition plate 4, the first tube 5 and the second tube 6 may be the same as that of the above-described embodiments, and will not be repeated herein. The difference is that in the present embodiment, the first tube 5 is a circular tube, and an inner diameter of the first tube 5 is 5 mm; and the second tube 6 is a circular tube, and an inner diameter of the second tube 6 is 5 mm.

A suction muffler according to another specific embodiment of the present disclosure will be described below with reference to the accompanying drawings.

The suction muffler according to embodiments of the present disclosure includes a housing assembly 1, a partition plate 4, a first tube 5 and a second tube 6. The housing assembly 1, the partition plate 4, the first tube 5 and the second tube 6 may be the same as that of the above-described embodiments, and will not be repeated herein. The difference is that in the present embodiment, the housing assembly 1 is internally provided with a first muffler cavity 13 and a second muffler cavity 14, and a ratio of a first length L1 of the first muffler cavity 13 and a second length L2 of the second muffler cavity 14 is 0.5.

A suction muffler according to still another specific embodiment of the present disclosure will be described below with reference to the accompanying drawings.

The suction muffler according to embodiments of the present disclosure includes a housing assembly 1, a partition plate 4, a first tube 5 and a second tube 6. The housing assembly 1, the partition plate 4, the first tube 5 and the second tube 6 may be the same as that of the above-described embodiments, and will not be repeated herein. The difference is that in the present embodiment, the housing assembly 1 is internally provided with a first muffler cavity 13 and a second muffler cavity 14, and a ratio of a first length L1 of the first muffler cavity 13 and a second length L2 of the second muffler cavity 14 is 0.4.

In the specification, it is to be understood that terms such as "central," "longitudinal," "lateral," "length," "width," "thickness," "upper," "lower," "front," "rear," "left," "right," "vertical," "horizontal," "top," "bottom," "inner," "outer," "clockwise," "counterclockwise," "axial," "radial" and "circumferential" should be construed to refer to the orientation as then described or as shown in the drawings under discussion. These relative terms are for convenience of description and do not require that the present disclosure be constructed or operated in a particular orientation.

In addition, terms such as "first" and "second" are used herein for purposes of description and are not intended to indicate or imply relative importance or significance. Thus, the feature defined with "first" and "second" may comprise one or more of this feature. In the description of the present disclosure, "a plurality of" means two or more than two, unless specified otherwise.

In the present disclosure, unless specified or limited otherwise, the terms "mounted," "connected," "coupled," "fixed" and the like are used broadly, and may be, for example, fixed connections, detachable connections, or integral connections; may also be mechanical or electrical connections; may also be direct connections or indirect connections via intervening structures; may also be inner communications of two elements, unless limited otherwise, the above terms can be understood by those skilled in the art according to specific situations.

In the present disclosure, unless specified or limited otherwise, a structure in which a first feature is "on" or "below" a second feature may include an embodiment in which the first feature is in direct contact with the second feature, and may also include an embodiment in which the first feature and the second feature are not in direct contact with each other, but are contacted via an additional feature formed therebetween. Furthermore, a first feature "on," "above," or "on top of" a second feature may include an embodiment in which the first feature is right or obliquely "on," "above," or "on top of" the second feature, or just means that the first feature is at a height higher than that of the second feature. While a first feature "below," "under," or "on bottom of" a second feature may include an embodiment in which the first feature is right or obliquely "below," "under," or "on bottom of" the second feature, or just means that the first feature is at a height lower than that of the second feature.

Reference throughout this specification to "an embodiment," "some embodiments," "an example," "a specific example," or "some examples," means that a particular feature, structure, material, or characteristic described in connection with the embodiment or example is included in at least one embodiment or example of the present disclosure. Thus, the appearances of the phrases in various places throughout this specification are not necessarily referring to the same embodiment or example of the present disclosure. Furthermore, the particular features, structures, materials, or characteristics may be combined in any suitable manner in one or more embodiments or examples. In addition, without conflicting, various embodiments or examples or features of various embodiments or examples described in the present specification may be combined by those skilled in the art.

## Claims

1. A suction muffler comprising:
a housing assembly (1) defining a cavity and comprising a suction port (2) and a discharge port (3);
at least one partition plate (4) provided in the cavity and configured to divide the cavity into at least two muffler cavities, the at least two muffler cavities comprising a first muffler cavity (13) and a second muffler cavity (14), the at least one partition plate (4) defining a penetrating hole (41) to communicate the first muffler cavity (13) with the second muffler cavity (14), the suction port (2) corresponding to the first muffler cavity (13); and
a first tube (5) having at least a portion provided in the first muffler cavity (13), one end of the first tube (5) being in communication with the suction port (2), the other end of the first tube (5) passing through the at least one partition plate (4) and being in communication with the second muffler cavity (14);
wherein
the discharge port (3) is in communication with the first muffler cavity (13) and the suction port (2) is located below the discharge port (3), **characterised in that** in an up-down arrangement direction of the discharge port (3) and the suction port (2), an end portion of the first tube (5) coupled to the suction port (2) is above an end portion of the first tube (5) in communication with the second muffler cavity (14).

2. The suction muffler according to claim 1, further comprising a second tube (6) having at least a portion provided in the second muffler cavity (14), an end of the second tube (6) being coupled to one partition plate (4), and the second tube (6) being in communication with the first muffler cavity (13) through the penetrating hole (41) in the at least one partition plate (4).

3. The suction muffler according to claim 2, wherein the first tube (5) comprises a circular tube, and an inner diameter of the first tube (5) is in a range of 6 mm-8 mm; and/or
the second tube (6) is a circular tube, and an inner diameter of the second tube (6) is in a range of 6 mm-8 mm.

4. The suction muffler according to any one of claims 1 to 3, wherein a surface of an inner wall of the housing assembly (1) is provided with a first slot (15), and a portion of the partition plate (4) is fitted in the first slot (15).

5. The suction muffler according to any one of claims 1 to 4, wherein an end portion of the first tube (5) is provided with a coupling member (7), the coupling member (7) is coupled to the housing assembly (1), and the coupling member (7) defines a communication hole (71) configured to communicate the suction port (2) with the first tube (5).

6. The suction muffler according to claim 5, wherein a surface of an inner wall of the housing assembly (1) is provided with a second slot (16), and a portion of the coupling member (7) is fitted in the second slot (16).

7. The suction muffler according to any one of claims 1 to 6, wherein in the up-down arrangement direction of the discharge port (3) and the suction port (2), the penetrating hole (41) is located above an end portion of the first tube (5) in communication with the second muffler cavity (14).

8. The suction muffler according to any one of claims 1 to 7, wherein the housing assembly (1) comprises a barrel (12) and a cover (11), a top of the barrel (12) comprises a top opening, the cover (11) is provided at the top opening of the barrel (12), the partition plate (4) and the first tube (5) are both provided in the barrel (12), the suction port (2) is provided to the barrel (12), and the discharge port (3) is provided to the cover (11).

9. The suction muffler according to any one of claims 1 to 8, wherein the first muffler cavity (13) has a first length (L1) in a direction from the first muffler cavity (13) to the second muffler cavity (14), the second muffler cavity (14) has a second length (L2) in the direction from the first muffler cavity (13) to the second muffler cavity (14), and a ratio of the first length (L1) to the second length (L2) is in a range of one-third to two-thirds.

## Patentansprüche

1. Ansaugschalldämpfer, umfassend:
eine Gehäuseanordnung (1), die einen Hohlraum definiert und einen Ansauganschluss (2) und einen Auslassanschluss (3) umfasst;
mindestens eine Trennplatte (4), die in dem Hohlraum bereitgestellt und dazu konfiguriert ist, den Hohlraum in mindestens zwei Schalldämpferhohlräume zu teilen, wobei die mindestens zwei Schalldämpferhohlräume einen ersten Schalldämpferhohlraum (13) und einen zweiten Schalldämpferhohlraum (14) umfassen, die mindestens eine Trennplatte (4) ein Durchgangsloch (41) definiert, um den ersten Schalldämpferhohlraum (13) mit dem zweiten Schalldämpferhohlraum (14) in Verbindung zu setzen, wobei der Ansauganschluss (2) dem ersten Schalldämpferhohlraum (13) entspricht; und
eine erste Röhre (5) mit mindestens einem in dem ersten Schalldämpferhohlraum (13) bereitgestellten Abschnitt, wobei ein Ende der ersten Röhre (5) mit dem Ansauganschluss (2) in Verbindung steht, das andere Ende der ersten Röhre (5) durch die mindestens eine Trennplatte (4) läuft und mit dem zweiten Schalldämpferhohlraum (14) in Verbindung steht;
wobei der Auslassanschluss (3) mit dem ersten Schalldämpferhohlraum (13) in Verbindung steht und sich der Ansauganschluss (2) unter dem Auslassanaschluss (3) befindet, **dadurch gekennzeichnet, dass** sich in einer Aufwärts-Abwärts-Anordnungsrichtung des Auslassanschlusses (3) und des Ansauganschlusses (2) ein an den Ansauganschluss (2) gekoppelter Endabschnitt der ersten Röhre (5) über einem mit dem zweiten Schalldämpferhohlraum (14) in Verbindung stehenden Endabschnitt der ersten Röhre (5) befindet.

2. Ansaugschalldämpfer nach Anspruch 1, ferner umfassend eine zweite Röhre (6) mit mindestens einem in dem zweiten Schalldämpferhohlraum (14) bereitgestellten Abschnitt, wobei ein Ende der zweiten Röhre (6) an eine Trennplatte (4) gekoppelt ist und die zweite Röhre (6) über das Durchgangsloch (41) in der mindestens einen Trennplatte (4) mit dem ersten Schalldämpferhohlraum (13) in Verbindung steht.

3. Ansaugschalldämpfer nach Anspruch 2, wobei die erste Röhre (5) eine kreisförmige Röhre umfasst und ein Innendurchmesser der ersten Röhre (5) in einem Bereich von 6 mm-8 mm liegt; und/oder
die zweite Röhre (6) eine kreisförmige Röhre ist und ein Innendurchmesser der zweiten Röhre (6) in einem Bereich von 6 mm-8 mm liegt.

4. Ansaugschalldämpfer nach einem der Ansprüche 1 bis 3, wobei eine Oberfläche einer Innenwand der Gehäuseanordnung (1) mit einer ersten Nut (15) versehen ist und ein Abschnitt der Trennplatte (4) in die erste Nut (15) eingesetzt ist.

5. Ansaugschalldämpfer nach einem der Ansprüche 1 bis 4, wobei ein Endabschnitt der ersten Röhre (5) mit einem Kopplungselement (7) versehen ist, wobei das Kopplungselement (7) an die Gehäuseanordnung (1) gekoppelt ist und das Kopplungselement (7) ein Verbindungsloch (71) definiert, das dazu konfiguriert ist, den Ansauganschluss (2) mit der ersten Röhre (5) in Verbindung zu setzen.

6. Ansaugschalldämpfer nach Anspruch 5, wobei eine Oberfläche einer Innenwand der Gehäuseanordnung (1) mit einer zweiten Nut (16) versehen ist und ein Abschnitt des Kopplungselements (7) in die zweite Nut (16) eingesetzt ist.

7. Ansaugschalldämpfer nach einem der Ansprüche 1 bis 6, wobei sich in der Aufwärts-Abwärts-Anordnungsrichtung des Auslassanschlusses (3) und des Ansauganschlusses (2) das Durchgangsloch (41) über einem mit dem zweiten Schalldämpferhohlraum (14) in Verbindung stehenden Endabschnitt der ersten Röhre (5) befindet.

8. Ansaugschalldämpfer nach einem der Ansprüche 1 bis 7, wobei die Gehäuseanordnung (1) ein Gefäß (12) und eine Abdeckung (11) umfasst, ein Oberes des Gefäßes (12) eine obere Öffnung umfasst, die Abdeckung (11) an der oberen Öffnung des Gefäßes (12) bereitgestellt ist, die Trennplatte (4) und die erste Röhre (5) beide in dem Gefäß (12) bereitgestellt sind, der Ansauganschluss (2) an dem Gefäß (12) bereitgestellt ist und der Auslassanschluss (3) an der Abdeckung (11) bereitgestellt ist.

9. Ansaugschalldämpfer nach einem der Ansprüche 1 bis 8, wobei der erste Schalldämpferhohlraum (13) eine erste Länge (L1) in einer Richtung von dem ersten Schalldämpferhohlraum (13) zu dem zweiten Schalldämpferhohlraum (14) aufweist, der zweite Schalldämpferhohlraum (14) eine zweite Länge (L2) in der Richtung von dem ersten Schalldämpferhohlraum (13) zu dem zweiten Schalldämpferhohlraum (14) aufweist und ein Verhältnis der ersten Länge (L1) zu der zweiten Länge (L2) in einem Bereich von einem Drittel bis zwei Drittel liegt.

## Revendications

1. Silencieux d'aspiration comportant :
un ensemble formant boîtier (1) définissant une cavité et comportant un orifice d'aspiration (2) et un orifice de décharge (3) ;
au moins une plaque de séparation (4) mise en oeuvre dans la cavité et configurée pour diviser la cavité en au moins deux cavités de silencieux, lesdites au moins deux cavités de silencieux comportant une première cavité de silencieux (13) et une deuxième cavité de silencieux (14), ladite au moins une plaque de séparation (4) définissant un trou de pénétration (41) pour faire communiquer la première cavité de silencieux (13) avec la deuxième cavité de silencieux (14), l'orifice d'aspiration (2) correspondant à la première cavité de silencieux (13) ; et
un premier tube (5) ayant au moins une partie mise en oeuvre dans la première cavité de silencieux (13), une extrémité du premier tube (5) étant en communication avec l'orifice d'aspiration (2), l'autre extrémité du premier tube (5) traversant ladite au moins une plaque de séparation (4) et étant en communication avec la deuxième cavité de silencieux (14) ;
dans lequel l'orifice de décharge (3) est en communication avec la première cavité de silencieux (13) et l'orifice d'aspiration (2) est situé en dessous de l'orifice de décharge (3), **caractérisé en ce que**, dans une direction d'agencement allant de haut en bas de l'orifice de décharge (3) et de l'orifice d'aspiration (2), une partie d'extrémité du premier tube (5) raccordée à l'orifice d'aspiration (2) se trouve au-dessus d'une partie d'extrémité du premier tube (5) en communication avec la deuxième cavité de silencieux (14).

2. Silencieux d'aspiration selon la revendication 1, comportant par ailleurs un deuxième tube (6) ayant au moins une partie mise en oeuvre dans la deuxième cavité de silencieux (14), une extrémité du deuxième tube (6) étant raccordée à une plaque de séparation (4), et le deuxième tube (6) étant en communication avec la première cavité de silencieux (13) par l'intermédiaire du trou de pénétration (41) dans ladite au moins une plaque de séparation (4).

3. Silencieux d'aspiration selon la revendication 2, dans lequel le premier tube (5) comporte un tube circulaire, et un diamètre intérieur du premier tube (5) se trouve dans une plage allant de 6 mm à 8 mm ; et/ou
le deuxième tube (6) est un tube circulaire, et le diamètre intérieur du deuxième tube (6) se trouve dans une plage allant de 6 mm à 8 mm.

4. Silencieux d'aspiration selon l'une quelconque des revendications 1 à 3, dans lequel une surface d'une paroi intérieure de l'ensemble formant boîtier (1) est dotée d'une première fente (15), et une partie de la plaque de séparation (4) est ajustée dans la première fente (15).

5. Silencieux d'aspiration selon l'une quelconque des revendications 1 à 4, dans lequel une partie d'extrémité du premier tube (5) est dotée d'un élément de raccordement (7), l'élément de raccordement (7) est raccordé à l'ensemble formant boîtier (1), et l'élément de raccordement (7) définit un trou de communication (71) configuré pour faire communiquer l'orifice d'aspiration (2) avec le premier tube (5).

6. Silencieux d'aspiration selon la revendication 5, dans lequel une surface d'une paroi intérieure de l'ensemble formant boîtier (1) est dotée d'une deuxième fente (16), et une partie de l'élément de raccordement (7) est ajustée dans la deuxième fente (16).

7. Silencieux d'aspiration selon l'une quelconque des revendications 1 à 6, dans lequel, dans la direction d'agencement allant de haut en bas de l'orifice de décharge (3) et de l'orifice d'aspiration (2), le trou de pénétration (41) est situé au-dessus d'une partie d'extrémité du premier tube (5) en communication avec la deuxième cavité de silencieux (14).

8. Silencieux d'aspiration selon l'une quelconque des revendications 1 à 7, dans lequel l'ensemble formant boîtier (1) comporte un cylindre (12) et un couvercle (11), une partie supérieure du cylindre (12) comporte une ouverture supérieure, le couvercle (11) est mis en oeuvre au niveau de l'ouverture supérieure du cylindre (12), la plaque de séparation (4) et le premier tube (5) sont tous les deux mis en oeuvre dans le cylindre (12), l'orifice d'aspiration (2) est mis en oeuvre sur le cylindre (12) et l'orifice de décharge (3) est mis en oeuvre sur le couvercle (11).

9. Silencieux d'aspiration selon l'une quelconque des revendications 1 à 8, dans lequel la première cavité de silencieux (13) a une première longueur (L1) dans une direction allant de la première cavité de silencieux (13) à la deuxième cavité de silencieux (14), la deuxième cavité de silencieux (14) a une deuxième longueur (L2) dans la direction allant de la première cavité de silencieux (13) à la deuxième cavité de silencieux (14), et un rapport entre la première longueur (L1) et la deuxième longueur (L2) se trouve dans une plage allant d'un tiers à deux tiers.
